# EUROPÄISCHE PATENTANMELDUNG

(11) **EP 3 786 866 A1**
(43) Veröffentlichungstag der Anmeldung: **03.03.2021**
(21) Anmeldenummer: 19194253.1
(22) Anmeldetag: 29.08.2019
(51) Int. Cl.: G06Q 10/08, G06F 16/901

(54) **VERFOLGUNG VON OBJEKTEN**

(71) Anmelder: Bayer Business Services GmbH, 51061 Köln (DE)
(72) Erfinder: Die Erfindernennung liegt noch nicht vor
(74) Vertreter: BIP Patents

(57) **Zusammenfassung**

Die vorliegende Erfindung befasst sich mit der Verfolgung von Objekten. Gegenstände der vorliegenden Erfindung sind ein Verfahren, eine Vorrichtung und ein Computerprogrammprodukt zur Verfolgung von Objekten.

## Beschreibung

Die vorliegende Erfindung befasst sich mit der Verfolgung von Objekten. Gegenstände der vorliegenden Erfindung sind ein Verfahren, eine Vorrichtung und ein Computerprogrammprodukt zur Verfolgung von Objekten.

Die Verfolgung von Objekten spielt in vielen Bereichen der Wirtschaft eine große Rolle. Als Beispiel sei die Verfolgung von Waren entlang ihrer Wertschöpfungskette angeführt. Üblicherweise sind Waren mit einer eindeutigen Kennung (z.B. einer Seriennummer) versehen (Serialisierung), um sie zu einem späteren Zeitpunkt eindeutig identifizieren zu können. Die eindeutige Kennung wird üblicherweise als optoelektronisch lesbarer Code (Strichcode, 2D-Code) auf der Verpackung einer Ware aufgedruckt oder ist in einem RFID-Transponder, der mit der Waren verbunden ist, gespeichert. An verschiedenen Punkten der Wertschöpfungskette, z.B. beim Verpacken, Verladen, bei Ankunft z.B. in einem Lager und/oder bei Entgegennahme durch einen Kunden und/oder dergleichen werden die eindeutigen Kennungen erfasst und es werden die jeweiligen Statusänderungen der Waren in einer Datenbank gespeichert.

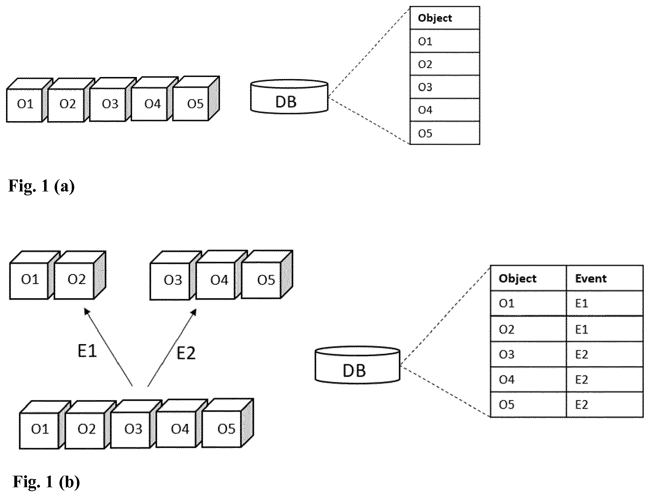

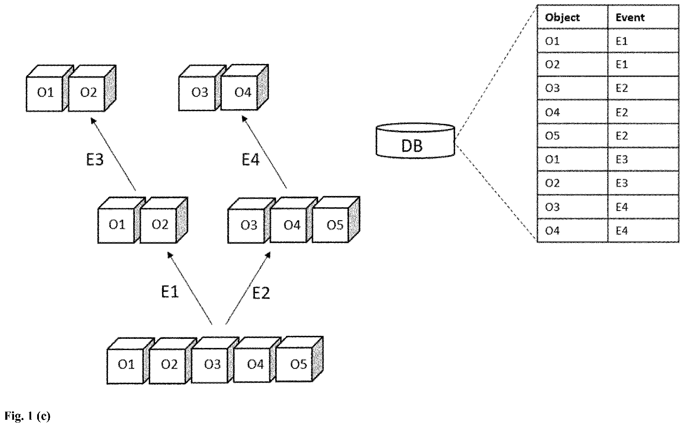

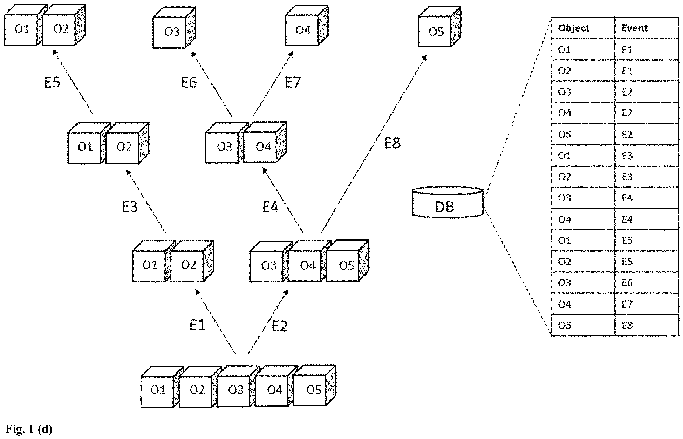

Üblicherweise werden die Statusänderungen in einer relationalen Datenbank in Form einer Tabelle festgehalten. Die Tabelle umfasst üblicherweise die eindeutigen Kennungen der Waren sowie Informationen dazu, welche (definierten) Ereignisse für die jeweiligen Waren eingetreten sind. Dies ist beispielhaft in Fig. 1 dargestellt. Fig. 1 (a) zeigt fünf Objekte O1, O2, O3, O4 und O5. Jedes Objekt ist anhand einer eindeutigen Kennung identifizierbar; im vorliegenden Fall anhand der Objektkennungen O1, O2, O3, O4 und O5. In einem Datenspeicher DB sind Informationen zu den Objekten in Tabellenform gespeichert. Dabei wird das jeweilige Objekt in dem Datenspeicher durch seine Objektkennung repräsentiert. In Fig. 1 (b) sind schematisch zwei Ereignisse E1 und E2 dargestellt. Für die Objekte O1 und O2 ist das Ereignis E1 eingetreten; für die Objekte O3, O4 und O5 ist das Ereignis E2 eingetreten. In dem Datenspeicher DB wird für die Objekte hinterlegt, welches Ereignis jeweils eingetreten ist. Dabei wird das Ereignis in der Tabelle durch eine Ereigniskennung (E1, E2) repräsentiert. In Fig. 1 (c) ist dargestellt, dass zwei weitere Ereignisse E3 und E4 eingetreten sind. Für die Objekte O1 und O2 ist das Ereignis E3 eingetreten; für die Objekte O3 und O4 ist das Ereignis E4 eingetreten. In dem Datenspeicher DB wird wiederum für die Objekte hinterlegt, welches Ereignis jeweils eingetreten ist. Dabei wird bei jedem neu eingetretenen Ereignis für jedes Objekt, für das das Ereignis eingetreten ist, ein neuer Eintrag erzeugt. In Fig 1 (d) ist dargestellt, dass vier weitere Ereignisse E5, E6, E7 und E8 eingetreten sind. Für die Objekte O1 und O2 ist das Ereignis E5 eingetreten; für das Objekt O3 ist das Ereignis E6 eingetreten; für das Objekt O4 ist das Ereignis E7 eingetreten; für das Objekt O5 ist das Ereignis E8 eingetreten. In dem Datenspeicher DB wird wiederum für die Objekte hinterlegt, welches Ereignis jeweils eingetreten ist.

Bei der in Fig. 1 (a) bis (d) dargestellten Verfolgung der Objekte wächst die Tabelle mit jedem neu eintretenden Ereignis um eine Anzahl neuer Einträge, die der Anzahl der Objekte entspricht, für die das neue Ereignis eintritt. Es sei angenommen, dass insgesamt *N* Objekte verfolgt werden, wobei *N* eine ganze Zahl und größer als 1 ist. Es treten die Ereignisse E₁ bis E*ₙ* ein, wobei *n* eine ganze Zahl und größer als 1 ist. Vom Ereignis E₁ sei eine Anzahl *N*₁ an Objekten betroffen, vom Ereignis E₂ sei eine Anzahl *N*₂ an Objekten betroffen und so fort. Dann beträgt die Zahl *Z* der Einträge in der Datenbank *Z*=*N*₁ + *N*₂ + ... + *Nₙ*.

Üblicherweise ist die Zahl N der Objekte, die verfolgt werden, wesentlich größer als die Zahl n der auftretenden Ereignisse. Insbesondere bei der Verfolgung von Waren kann die Zahl N der verfolgten Objekte sehr große Werte annehmen. Das bedeutet, dass eine große Datenmenge erzeugt und gespeichert werden muss. Üblicherweise werden die Daten von verschiedenen an der Wertschöpfungskette von Waren Beteiligten genutzt und müssen dementsprechend von einem Beteiligten an einen anderen Beteiligten übermittelt werden. Dies erzeugt eine großen Datenverkehr.

Ausgehend vom Stand der Technik bestand die Aufgabe darin, die für die Verfolgung von Objekten notwendige Datenmenge zu reduzieren.

Dies Aufgabe wird durch die Gegenstände der unabhängigen Patentansprüche gelöst. Bevorzugte Ausführungsformen finden sich in den abhängigen Patentansprüchen, in der vorliegenden Beschreibung und in den Figuren.

Ein erster Gegenstand der vorliegenden Erfindung ist somit ein Verfahren zur Verfolgung von Objekten, umfassend die Schritte:
- Bereitstellen einer Vielzahl von Objekten
- Erfassen von Ereignissen, die für die Objekte eingetreten sind, und
- Ablegen von Informationen zu den Objekten und zu den eingetretenen Ereignissen in einer ersten Tabelle und in einer zweiten Tabelle
wobei in der ersten Tabelle jedes Objekt durch eine eindeutige Objektkennung repräsentiert wird,
wobei in der ersten Tabelle für jedes Objekt dasjenige Ereignis abgelegt wird, das für das jeweilige Objekt zuletzt eingetreten ist,
wobei in der zweiten Tabelle für jedes Ereignis, dem ein Ereignis unmittelbar vorangegangen ist, das jeweilige vorangegangene Ereignis eingetragen wird.

Ein weiterer Gegenstand der vorliegenden Erfindung ist eine Vorrichtung umfassend
- eine Eingabeeinheit
- eine Steuer- und Recheneinheit und
- einen Datenspeicher
wobei die Steuer- und Recheneinheit konfiguriert ist, die Eingabeeinheit zu veranlassen, Objektkennungen einer Vielzahl von Objekten zu empfangen,
wobei die Steuer- und Recheneinheit konfiguriert ist, eine erste Tabelle zu erzeugen, wobei jedes Objekt in der ersten Tabelle durch die jeweilige Objektkennung repräsentiert wird,
wobei die Steuer- und Recheneinheit konfiguriert ist, die Eingabeeinheit zu veranlassen, Informationen über Ereignisse und über diejenigen Objekte, für die die jeweiligen Ereignisse eingetreten sind, zu empfangen,
wobei die Steuer- und Recheneinheit konfiguriert ist, in der ersten Tabelle für die Objekte festzuhalten, welches Ereignis jeweils zuletzt eingetreten ist,
wobei die Steuer- und Recheneinheit konfiguriert ist, eine zweite Tabelle zu erzeugen und in der zweiten Tabelle für jedes Ereignis, dem ein Ereignis vorangegangen ist, das unmittelbar vorangegangene Ereignis festzuhalten,
wobei die Steuer- und Recheneinheit konfiguriert ist, die erste Tabelle und die zweite Tabelle in dem Datenspeicher zu speichern.

Ein weiterer Gegenstand der vorliegenden Erfindung ist ein Computerprogrammprodukt umfassend einen Programmcode, der auf einem Datenträger gespeichert ist, und der ein Computersystem dazu veranlasst, die folgenden Schritte auszuführen, wenn der Programmcode in den Arbeitsspeicher des Computersystems geladen ist:
- Empfangen von Objektkennungen einer Vielzahl von Objekten,
- Erzeugen einer ersten Tabelle, wobei jedes Objekt in der ersten Tabelle durch die jeweilige Objektkennung repräsentiert wird,
- Empfangen von Informationen über Ereignisse und über diejenigen Objekte, für die die jeweiligen Ereignisse eingetreten sind,
- für alle Objekte, für die mindestens ein Ereignis eingetreten ist: Eintragen des jeweils zuletzt eingetretenen Ereignisses in die ersten Tabelle,
- Erzeugen einer zweiten Tabelle,
- für jedes Ereignis, das für mindestens ein Objekt eingetreten ist und dem mindestens ein Ereignis vorangegangen ist: Eintragen des unmittelbar vorangegangenen Ereignisses in die zweite Tabelle,
- Speichern der ersten Tabelle und der zweiten Tabelle in einem Datenspeicher.

Die Erfindung wird nachstehend näher erläutert, ohne zwischen den Erfindungsgegenständen (Verfahren, Vorrichtung, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, Vorrichtung, Computerprogrammprodukt) sie erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen dar.

Die vorliegende Erfindung dient der Verfolgung von Objekten. Ein "Objekt" ist vorzugsweise ein physischer (greifbarer, körperlicher) Gegenstand. Vorzugsweise handelt es sich bei den hier beschriebenen Objekten um Waren. Unter dem Begriff "Waren" werden bewegliche Sachen verstanden, die Gegenstand des Handelsverkehrs sind oder sein können. Besonders bevorzugte Objekte (Waren) sind pharmazeutische Produkte (Arzneimittel, Medikamente, Diagnostika und andere). Es ist aber auch denkbar, die Erfindung auf körperlose Objekte wie beispielsweise Daten (Musikdateien, Bilddateien, Videodateien, Dokument-Dateien, Präsentationsdateien, Datenpakete, Softwarebausteine, Programmierbibliotheken oder dergleichen) anzuwenden.

Ein Objekt im Sinne der Erfindung kann mehrere Bestandteile umfassen; beispielsweise kann ein Objekt ein Produkt in einer Verpackung sein. Denkbar ist ferner, dass ein Objekt eine Palette oder eine Transportbox oder ein Container oder dergleichen ist, der eine Mehrzahl an Objekten (z.B. Waren) umfasst.

Ausgangspunkt für die vorliegende Erfindung ist eine Vielzahl an Objekten. Der Begriff "Vielzahl" bedeutet eine Anzahl von mehr als zehn, vorzugsweise mehr als einhundert. Üblicherweise beträgt die Anzahl der Objekte, die erfindungsgemäß verfolgt werden, mehr als tausend.

Es ist denkbar, dass die Vielzahl an Objekten sowohl körperliche als auch körperlose Objekte umfasst; zum Beispiel können mehrere Objekte zu einem logischen Objekt zusammengefasst werden (siehe hierzu WO2018019720A1 Seite 5 Zeile 27 bis Seite 6 Zeile 5).

Ein Objekt im Sinne der vorliegenden Erfindung ist anhand einer eindeutigen Kennung eindeutig identifizierbar d.h. von anderen Objekten unterscheidbar. Der Begriff "eindeutige Kennung" weist darauf hin, dass sich die eindeutige Kennung genau einem Objekt zuordnen lässt; es gibt als keine zwei Objekte, die über dieselbe Kennung verfügen.

Die eindeutige Kennung kann eine Nummer oder ein alphanumerischer Code oder ein Binärcode oder ein Hexadezimalcode oder dergleichen sein.

Unter der eindeutigen Kennung wird das jeweilige Objekt in einem System zur elektronischen Datenverarbeitung (EDV-System) prozessiert, d.h. eine eindeutige Kennung repräsentiert das jeweilige Objekt in dem EDV-System. Die eindeutige Kennung eines Objekts wird in dieser Beschreibung auch als Objektkennung bezeichnet.

Üblicherweise sind körperliche Objekte mit einem Informationsträger ausgestattet, der die jeweilige Objektkennung umfasst. Es ist zum Beispiel denkbar, dass die Objektkennung als optoelektronischer Code (z.B. als Strichcode oder 2D-Code) auf dem Objekt aufgedruckt ist oder dass die Objektkennung in einem RFID-Transponder, der mit dem Objekt verbunden ist, gespeichert ist.

Die Objekte der vorliegenden Erfindung werden prozessiert, d.h. sie unterliegen mindestens einem Prozessschritt, üblicherweise einer Mehrzahl an Prozessschritten. Ein solcher Prozessschritt wird in dieser Beschreibung auch als Ereignis bezeichnet. Ein solches Ereignis führt üblicherweise zu einem veränderten Zustand / Status des jeweiligen Objekts. Beispiele für Ereignisse sind: Verpacken, Verladen, Transportieren, Versenden, Empfangen, Abladen, Umladen, Umpacken, Entpacken, Heizen, Kühlen und dergleichen. Ereignisse im Sinne der Erfindung können auch Zustandsänderungen / Statusänderungen sein, die unerwünscht sind, wie beispielsweise Abhandenkommen, Herunterfallen, Zerbrechen und dergleichen. Ferner ist es denkbar, dass ein Objekt durch ein Ereignis keine Zustandsänderung erfährt; z.B. ist es denkbar, dass gemäß einem Ereignis mehrere Objekte zu einem logischen Objekt zusammengefasst werden (Kollektivbildung). Denkbar ist auch, dass mehrere Ereignisse in einem Ereignis zusammengefasst werden, zum Beispiel kann ein Ereignis mit der Bezeichnung "Transportieren" die Ereignisse "Verpacken", "Verladen", "von einem Ort A zu einem Ort B bewegen" und "Abladen" umfassen.

Für die Definition eines Ereignisses ist zumindest die Angabe der Zustandsänderung / Statusänderung (*was* passiert ist) sowie die Nennung der betroffenen Objekte (*welche* Objekte betroffen sind) erforderlich.

Üblicherweise liegen Definitionen für "Standardereignisse" vor, die für Objekte eintreten können.

Daneben können Ereignisse durch weitere Angaben definiert sein, z.B. *wann* das Ereignis eintrat, wo das Ereignis eintrat, *von wem* das Ereignis initiiert / vorgenommen wurde, *weshalb* das Ereignis eingetreten ist und dergleichen.

Ein Ereignis weist üblicherweise (wie auch ein Objekt) eine eindeutige Kennung auf, unter der das Ereignis identifizierbar ist. Eine solche Ereigniskennung repräsentiert das jeweilige Ereignis in einem EDV-System. Die Ereigniskennung kann eine Nummer oder ein alphanumerischer Code oder ein Binärcode oder ein Hexadezimalcode oder dergleichen sein.

Üblicherweise erfährt ein Objekt mehrere Ereignisse. Dabei folgen die mehreren Ereignisse üblicherweise zeitlich aufeinander. Falls zwei Ereignisse zeitgleich ablaufen, können sie entweder zu einem Ereignis zusammengefasst werden, oder man entscheidet sich für eines der Ereignisse, für das angenommen wird, es sei vor dem anderen Ereignis eingetreten. Wenn ein Objekt mehr als ein Ereignis erfährt lässt sich jedenfalls eine Ereignishistorie (Ereigniskette) konstruieren. Eine Ereignishistorie ist eine Kette von zeitlich aufeinanderfolgenden Ereignissen. In einer solchen Ereignishistorie gibt es ein Ereignis, das für das jeweilige Objekt zuletzt eingetreten ist. Dieses Ereignis wird in dieser Beschreibung auch als "letztes Ereignis" oder ,jüngstes Ereignis" bezeichnet. Ferner gibt es in einer solchen Ereignishistorie ein erstes Ereignis. Mit Ausnahme des ersten Ereignisses geht jedem Ereignis der Ereignishistorie genau ein Ereignis unmittelbar voran (bzw. lässt sich wie oben beschrieben eine Ereignishistorie konstruieren, bei der mit Ausnahme des ersten Ereignisses jedem Ereignis genau ein Ereignis unmittelbar vorangeht). Dieses unmittelbar vorangehende bzw. vorangegangene Ereignis wird in dieser Beschreibung auch als Vorgängerereignis (Previous Event) bezeichnet. Dabei bedeutet der Begriff "unmittelbar", dass gemäß der Ereignishistorie zwischen einem Ereignis und seinem Vorgängerereignis kein weiteres Ereignis für das jeweilige Objekt eingetreten (bzw. erfasst worden) ist.

Die vorliegende Erfindung dient wie oben bereits beschrieben der Verfolgung einer Vielzahl von Objekten. Dabei bedeutet der Begriff "Verfolgung", dass für die einzelnen Objekte die Ereignishistorie erfasst und festgehalten wird, so dass auf Basis der festgehaltenen Informationen zu jedem Objekt die Ereignishistorie ermittelt (reproduziert) werden kann.

Gemäß der vorliegenden Erfindung erfolgen das Erfassen und Festhalten der Ereignishistorien von Objekten mit Hilfe von zwei Tabellen, einer ersten Tabelle und einer zweiten Tabelle. Dabei ist der Begriff "Tabelle" weit auszulegen. Unter dem Begriff "Tabelle" wird jede geordnete Zusammenstellung von Daten verstanden.

Eine erste Tabelle umfasst Informationen zu den Objekten, die verfolgt werden. In der ersten Tabelle ist für jedes Objekt, für das mindestens ein Ereignis eingetreten ist, das zuletzt eingetretene Ereignis (das letzte/jüngste Ereignis) eingetragen.

In der zweiten Tabelle ist für jedes Ereignis, das für mindestens ein Objekt eingetreten ist und dem mindestens ein Ereignis vorangegangen ist, das unmittelbar vorangegangene Ereignis (das Vorgängerereignis) eingetragen.

Tritt für eine Zahl N an Objekten ein neues Ereignis E ein, werden die in der ersten Tabelle für die Objekte bereits eingetragenen letzten Ereignisse durch das neue (letzte) Ereignis E ersetzt. Ferner wird in der zweiten Tabelle das neue Ereignis E eingetragen und es wird für das neue Ereignis E eingetragen, welches Ereignis dem Ereignis E unmittelbar vorangegangen ist. Bei jedem neu eintretenden Ereignis kommt somit lediglich ein einziger neuer Eintrag hinzu, während bei der in der Einleitung zu dieser Beschreibung erläuterten bisherigen (klassischen) Vorgehensweise für jedes neue Ereignis genau so viele neue Einträge hinzukommen, wie Objekte von dem Ereignis betroffen sind. Damit kommt die vorliegende Erfindung mit weniger Speicherbedarf für die Verfolgung von Objekten aus als die bisherige Vorgehensweise bei der Verfolgung von Objekten. Ferner ist auch der Datenverkehr zum Austausch von Informationen zu Objekten zwischen verschiedenen Beteiligten geringer.

Soll die Ereignishistorie für ein Objekt in Erfahrung gebracht werden, identifiziert man zunächst in der ersten Tabelle das letzte Ereignis für dieses Objekt. Dann prüft man anhand der zweiten Tabelle, ob dem letzten Ereignis ein Ereignis vorangegangen ist. Falls nicht, besteht die Ereignishistorie nur aus dem letzten Ereignis. Falls für das letzte Ereignis in der zweiten Tabelle ein Vorgängerereignis aufgeführt ist, umfasst die Ereignishistorie zumindest das letzte Ereignis und sein Vorgängerereignis. Nun wird anhand der zweiten Tabelle geprüft, ob das Vorgängerereignis seinerseits ein Vorgängerereignis aufweist. Falls nicht, besteht die Ereigniskette lediglich aus dem letzten Ereignis und seinem Vorgängerereignis. Weist das Vorgängerereignis des letzten Ereignisses hingegen seinerseits ein Vorgängerereignis auf, so umfasst die Ereigniskette zumindest das letzte Ereignis, sein Vorgängerereignis und das Vorgängerereignis des Vorgängerereignisses. Der Prozess des Prüfens, ob es ein weiteres Vorgängerereignis gibt, wird so lange fortgesetzt, bis es kein weiteres Vorgängerereignis mehr gibt. Die Ereignishistorie besteht dann aus dem letztem Ereignis und allen identifizierten Vorgängerereignissen.

Die Erfindung wird nachfolgend anhand von Figuren näher erläutert, ohne die Erfindung auf die in den Figuren gezeigten Merkmale und Merkmalskombinationen beschränken zu wollen.

Es zeigen: Fig. 1 zeigt schematisch die Verfolgung von Objekten gemäß der bisherigen Vorgehensweise. Die Figuren 1 (a) bis 1 (d) sind oben bereits detailliert beschrieben worden.

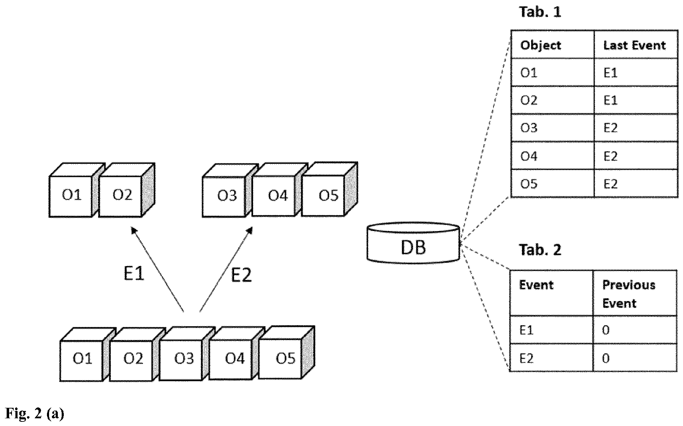

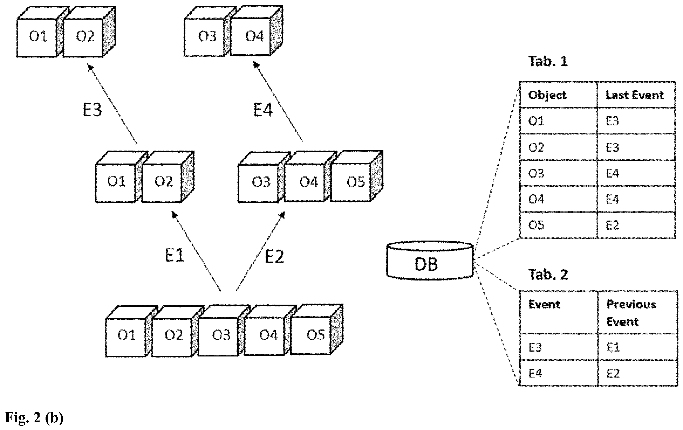

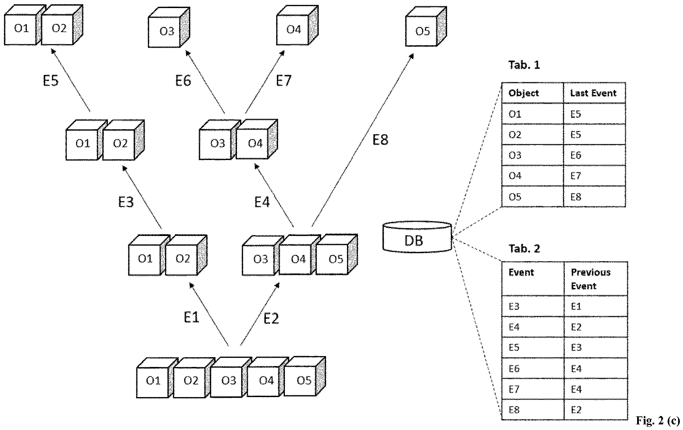

Fig. 2 schematisch und beispielhaft eine bevorzugte Ausführungsform der vorliegenden Erfindung. Die in Fig. 2 (a) dargestellte Situation schließt zeitlich an die in Fig. 1 (a) gezeigte Situation an. Ausgangspunkt der Erfindung sind die bereits in Fig. 1 (a) dargestellten fünf Objekte O1, O2, O3, O4 und O5, die durch ihre eindeutigen Kennungen identifizierbar sind. In einem Datenspeicher DB werden Informationen zu den Objekten in Tabellenform anhand der eindeutigen Objektkennungen gesammelt. In Fig. 2 (a) sind zwei Ereignisse E1 und E2 eingetreten. Ereignis E1 betrifft die Objekte O1 und O2; Ereignis E2 betrifft die Objekte O3, O4 und O5. In dem Datenspeicher DB wird in einer ersten Tabelle (Tab. 1) hinterlegt, dass für die Objekte O1 und O2 das Ereignis E1 eingetreten ist und für die Objekte O3, O4 und O5 das Ereignis E2 eingetreten ist. In einer zweiten Tabelle (Tab. 2) wird für jedes stattgefundene Ereignis hinterlegt, welches Ereignis dem jeweiligen Ereignis unmittelbar vorangegangen ist (*Previous Event*). Im vorliegenden Fall sind den Ereignissen E1 und E2 keine Ereignisse vorangegangen. Deswegen ist in der zweiten Tabelle für die Ereignisse E1 und E2 in dem jeweiligen Feld *Previous Event* eine Null eingetragen. Denkbar ist auch, dass in der zweiten Tabelle nur diejenigen Ereignisse aufgeführt werden, die ein Vorgängerereignis aufweisen. Da die Ereignisse E1 und E2 keine Vorgängerereignisse aufweisen, ist es also denkbar, dass die in Fig. 2 (a) gezeigte zweite Tabelle keine Einträge aufweist, also leer ist. Diese Vorgehensweise, in die zweite Tabelle nur diejenigen Ereignisse aufzunehmen, die ein Vorgängerereignis aufweisen, ist für die in den Figuren 2 (b) und (c) gezeigten Szenarien realisiert.

In Fig. 2 (b) sind (wie in Fig. 1 (c)) zwei neue Ereignisse eingetreten, E3 und E4, wobei das Ereignis E3 die Objekte O1 und O2 und das Ereignis E4 die Objekte O3 und O4 betrifft. Im Unterschied zu der in Fig. 1 (c) dargestellten Vorgehensweise wird im Fall von Fig. 2 (b) in der ersten Tabelle (Tab. 1) für die Objekte lediglich das zuletzt stattgefundene Ereignis festgehalten (E3 für O1 und O2; E4 für O3 und O4 und E2 für 05). In der zweiten Tabelle (Tab. 2) wird für jedes Ereignis, das ein Vorgängerereignis aufweist, das entsprechende Vorgängerereignis festgehalten (E1 ist das Vorgängerereignis von E3 und E2 ist das Vorgängerereignis von E4; E1 und E2 haben ihrerseits keine Vorgängerereignisse).

Aus der Kombination der ersten Tabelle und der zweiten Tabelle lässt sich für jedes Objekt die Historie der stattgefundenen Ereignisse ablesen. Dies sei am Beispiel des Objekts O1 erläutert. Das für das Objekt O1 zuletzt stattgefundene Ereignis ist gemäß der ersten Tabelle das Ereignis E3. Gemäß der zweiten Tabelle ist dem Ereignis E3 das Ereignis E1 vorangegangen. Das Ereignis E1 ist in der zweiten Tabelle nicht aufgeführt (oder es ist, wie in Bezug zur Fig. 2 (a) beschrieben, in der zweiten Tabelle für das Ereignis E1 festgehalten, dass es kein Vorgängerereignis aufweist). Dementsprechend lautet die Ereignishistorie für Objekt O1: E1 → E3.

Die in Fig. 2 (b) dargestellte Vorgehensweise bei der Verfolgung von Objekten kommt mit weniger Einträgen in dem Datenspeicher aus als die in Fig. 1 (c) dargestellte Vorgehensweise; im Fall von Fig. 2 (b) liegen 7 Einträge (verteilt auf zwei Tabellen) vor und im Fall von Fig. 1 (c) liegen 9 Einträge vor.

In Fig. 2 (c) sind (wie in Fig. 1 (d)) vier neue Ereignisse eingetreten, E5, E6, E7 und E8, wobei das Ereignis E5 die Objekte O1 und O2, das Ereignis E6 das Objekt O3, das Ereignis E7 das Objekt O4 und das Ereignis E8 das Objekt O5 betrifft. In der ersten Tabelle (Tab. 1) wird wiederum für jedes Objekt lediglich dasjenige Ereignis festgehalten, das zuletzt eingetreten ist. Das heißt, dass "neue zuletzt eingetretene Ereignis" ersetzt das "bisher zuletzt eingetretene Ereignis". In der zweiten Tabelle (Tab. 2) wird für jedes Ereignis, das ein Vorgängerereignis aufweist, das jeweilige Vorgängerereignis festgehalten.

Aus der Kombination der ersten Tabelle und der zweiten Tabelle lässt sich für jedes Objekt die Historie der stattgefundenen Ereignisse ablesen. Dies sei am Beispiel des Objekts O4 erläutert. Das für das Objekt O4 zuletzt stattgefundene Ereignis ist gemäß der ersten Tabelle das Ereignis E7. Gemäß der zweiten Tabelle ist dem Ereignis E7 das Ereignis E4 vorangegangen. Ferner ist gemäß der zweiten Tabelle dem Ereignis E4 das Ereignis E2 vorangegangen. Das Ereignis E2 ist in der zweiten Tabelle nicht aufgeführt (oder es ist, wie in Bezug zur Fig. 2 (a) beschrieben, in der zweiten Tabelle für das Ereignis E2 festgehalten, dass E2 kein Vorgängerereignis aufweist). Dementsprechend lautet die Ereignishistorie für Objekt O4: E2→E4→E7.

Die in Fig. 2 (c) dargestellte Vorgehensweise bei der Verfolgung von Objekten kommt mit weniger Einträgen aus als die in Fig. 1 (d) dargestellte Vorgehensweise; im Fall von Fig. 2 (c) liegen 11 Einträge (verteilt auf zwei Tabellen) vor und im Fall von Fig. 1 (d) liegen 14 Einträge vor.

Im vorliegenden Beispiel ist der Unterschied bei der Zahl der Einträge vergleichsweise gering (11 Einträge gegenüber 14 Einträgen in Bezug auf die Szenarien der Figuren 2 (c) und 1 (d)). Dies liegt daran, dass die in dem vorliegenden Beispiel aufgeführten Ereignisse nur eine geringe Zahl an Objekten betrafen. Die Ereignisse E6, E7 und E8 betrafen beispielsweise nur jeweils ein einzelnes Objekt. Für den Fall, dass es für jedes Objekt individuelle Ereignisse gibt und es keine zwei (oder mehr) Objekte gibt, die demselben Ereignis unterliegen, sind die Zahlen der Einträge für die in den Figuren 1 (klassisch) und 2 (erfindungsgemäß) dargestellten Vorgehensweise gleich groß. Üblicherweise betreffen Ereignisse jedoch eine Mehrzahl an Objekten. In diesem Fall sind bei der erfindungsgemäßen Verfolgung von Objekten weit weniger Einträge in einem Datenspeicher erforderlich als bei der klassischen Vorgehensweise.

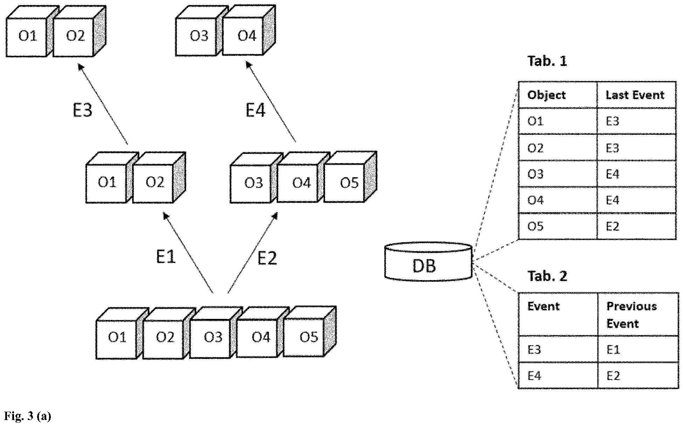

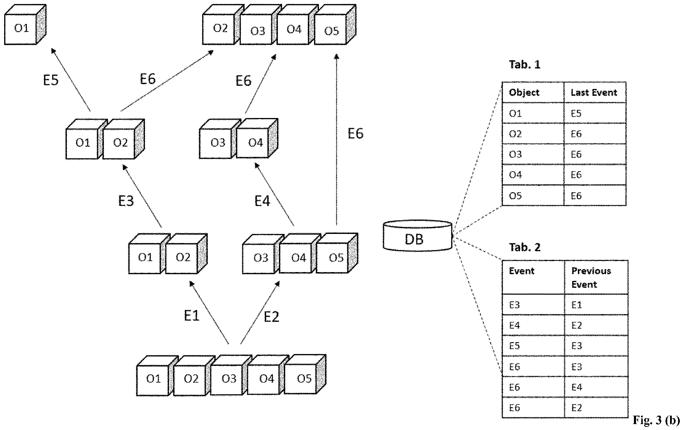

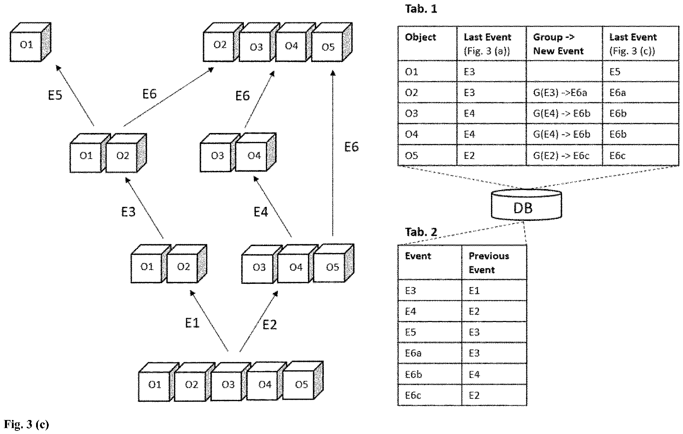

In Figur 3 zeigt beispielhaft und schematisch eine weitere Ausführungsform der vorliegenden Erfindung. In Fig. 3 (a) ist für fünf Objekte O1, O2, O3, O4 und O5 die Ereignishistorie schematisch dargestellt. Die Ereignishistorien sind
- für die Objekte O1 und O2: E1→E3
- für die Objekte O3 und O4: E2→E4
- für das Objekt O5 : E2.

In der ersten Tabelle (Tab. 1) ist entsprechend
- für die Objekte O1 und O2 festgehalten, dass das letzte Ereignis das Ereignis E3 ist,
- für die Objekte O3 und O4 festgehalten, dass das letzte Ereignis das Ereignis E4 ist, und
- für das Objekt O5 festgehalten, dass das letzte Ereignis das Ereignis E2 ist.

In der zweiten Tabelle (Tab. 2) ist entsprechend
- für Ereignis E3 festgehalten, das sein Vorgängerereignis das Ereignis E1 ist, und
- für Ereignis E4 festgehalten, das sein Vorgängerereignis das Ereignis E2 ist.

Das in Fig. 3 (a) gezeigte Szenario entspricht dem in Fig. 2 (b) gezeigten Szenario.

Das in Fig. 3 (b) gezeigte Szenario schließt zeitlich an das in Fig. 3 (a) gezeigte Szenario an. Es ist neues Ereignis E6 eingetreten. Das Ereignis E6 betrifft die Objekte O2, O3, O4 und O5. Würde man nun, wie bisher beschrieben, für jedes vom Ereignis E6 betroffene Objekt das letzte Ereignis in der ersten Tabelle (Tab. 1) durch das Ereignis E6 ersetzen, und in der zweiten Tabelle (Tab. 2) für das Ereignis E6 sein Vorgängerereignis festhalten, würden sich für das Ereignis E6 drei Vorgängerereignisse ergeben, je nachdem, von welchem Objekt man ausgehen würde. Aus der Kombination der ersten Tabelle und der zweiten Tabelle würde sich auch nicht mehr für jedes Objekt die Ereignishistorie reproduzieren lassen. Der Grund für diese Diskrepanz ist, dass für die Objekte O2, O3, O4 und O5 das gleiche Ereignis eingetreten ist, die Objekte jedoch eine unterschiedliche Ereignishistorie aufweisen. So etwas kann beispielsweise dann passieren, wenn die Ereignisse sehr generisch definiert sind wie beispielsweise das Ereignis "Entgegennahme durch den Kunden". Um diese Diskrepanz zu unterbinden, können Ereignisse spezifischer definiert werden, um zu verhindern, dass ein Ereignis an verschiedenen Stellen von verschiedenen Ereignishistorien auftritt.

Eine bevorzugte Ausführungsform erzeugt hingegen für ein Ereignis, dass für Objekte eintritt, die verschiedene Ereignishistorien aufweisen, verschiedene Ereigniskennungen. Dies ist schematisch und beispielhaft in Fig. 3 (c) dargestellt. Es werden die Informationen empfangen, dass ein Ereignis E6 eingetreten ist, von dem die Objekte O2, O3, O4 und O5 betroffen sind. Es wird nun in einem ersten Schritt anhand der ersten Tabelle (Tab. 1) geprüft, ob alle Objekte, die von dem Ereignis E6 betroffen sind, das gleiche letzte Ereignis aufweisen. Die letzten Ereignisse sind aus Fig. 3 (a) in die erste Tabelle von Fig. 3 (c) übernommen worden. Die Objekte O3 und O4 weisen das gleiche letzte Ereignis auf: E4. Die Objekte O2 und O5 weisen hingegen andere letzte Ereignisse auf: E3 (im Fall von O2) und E2 (im Fall von O5). Da die Objekte, die von dem Ereignis E6 betroffen sind, nicht alle das gleiche letzte Ereignis aufweisen, können die in der ersten Tabelle aufgeführten letzten Ereignisse nicht einfach durch das neue Ereignis E6 ersetzt werden. Stattdessen werden in einem ersten Schritt Gruppen gebildet. Dabei werden so viele Gruppen gebildet, wie unterschiedliche letzte Ereignisse für die betroffenen Objekte vorliegen. Im vorliegenden Fall liegen für die betroffenen Objekte O2, O3, O4 und O5 drei verschiedene letzte Ereignisse vor: E3, E4 und E2. Es werden also drei Gruppen gebildet. Die letzten Ereignisse werden den Gruppen zugeordnet; das heißt es gibt eine Gruppe, der das letzte Ereignis E3 zugeordnet ist, es gibt eine Gruppe, der das letzte Ereignis E4 zugeordnet ist und es gibt eine Gruppe, der das letzte Ereignis E2 zugeordnet ist. Die Objekte werden den Gruppen zugeordnet. Jedes Objekt wird genau einer Gruppe zugeordnet, und zwar derjenigen Gruppe, der das Ereignis zugeordnet ist, das für das jeweilige Objekt das letzte Ereignis ist. Das Objekt O2 wird der Gruppe zugordnet, der das letzte Ereignis E3 zugeordnet ist. Die Objekte O3 und O4 werden der Gruppe zugeordnet, der das Ereignis E4 zugeordnet ist. Das Objekt O5 wird der Gruppe zugordnet, der das letzte Ereignis E2 zugeordnet ist. In einem nächsten Schritt werden für das neue Ereignis E6 genau so viele Ereigniskennungen erzeugt wie Gruppen vorhanden sind; im vorliegenden Fall drei Ereigniskennungen und zwar die Ereigniskennungen E6a, E6b und E6c. Jede Ereigniskennung wird genau einer Gruppe zugeordnet; dies kann willkürlich geschehen; im vorliegenden Fall wird der Gruppe mit dem Objekt O2 die Ereigniskennung E6a zugeordnet, der Gruppe mit den Objekten O3 und O4 die Ereigniskennung E6b und der Gruppe mit dem Objekt O5 die Ereigniskennung E6c. In einem nächsten Schritt wird in der ersten Tabelle für jedes Objekt das letzte Ereignis aus Fig. 3(a) durch diejenige Ereigniskennung ersetzt, die der Gruppe zugeordnet ist, zu der das jeweilige Objekt gehört. Im vorliegenden Fall ist das letzte Ereignis für Objekt O2 das Ereignis E6a, das letzte Ereignis für die Objekte O3 und O4 das Ereignis E6b und das letzte Ereignis für Objekt O5 das Ereignis E6c. Für O1 ist gemäß der Figur 3 (a) das bisherige letzte Ereignis E3. Für O1 ist gemäß Fig. 3 (c) das neue Ereignis E5 eingetreten. Das Objekt O1 ist das einzige Objekt in Fig. 3 (c), für das das Ereignis E5 eingetreten ist. Dementsprechend wird in der ersten Tabelle für das Objekt O1 das bisherige letzte Ereignis (E3) durch das neue letzte Ereignis (E5) ersetzt.

In der zweiten Tabelle wird für alle neu in der ersten Tabelle auftretenden letzten Ereignisse jeweils ein neuer Eintrag angelegt. Für das letzte Ereignis E5 wird festgehalten, dass das Vorgängerereignis das Ereignis E3 ist; für das letzte Ereignis E6a wird festgehalten, dass das Vorgängerereignis das Ereignis E3 ist; für das letzte Ereignis E6b wird festgehalten, dass das Vorgängerereignis das Ereignis E4 ist; für das letzte Ereignis E6c wird festgehalten, dass das Vorgängerereignis das Ereignis E2 ist.

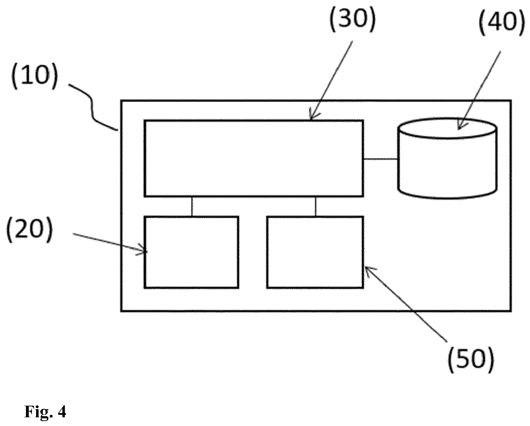

Fig. 4 zeigt schematisch und beispielhaft eine Ausführungsform der erfindungsgemäßen Vorrichtung. Die Vorrichtung (10) umfasst eine Eingabeeinheit (20), eine Steuer- und Recheneinheit (30), einen Datenspeicher (40) und eine Ausgabeeinheit (50).

Über die Eingabeeinheit (20) empfängt die Vorrichtung (10) Informationen zu Ereignissen und den Objekten, die von den Ereignissen betroffen sind.

Die Steuer- und Recheneinheit (30) ist konfiguriert, die Informationen zu den Ereignissen und den Objekten zu verwalten, um für jedes Objekt eine Ereignishistorie reproduzieren zu können. Dazu erzeugt und pflegt die Steuer- und Recheneinheit (30) zwei Tabellen, eine erste Tabelle und eine zweite Tabelle. Die Tabellen können in dem Datenspeicher (40) gespeichert werden und/oder über die Ausgabeeinheit (50) gegenüber einer Person angezeigt werden. Der Datenspeicher (40) kann ein integraler Bestandteil der Vorrichtung (10) sein; es ist aber auch denkbar, dass der Datenspeicher (40) als separate Einheit ausgeführt ist, auf die die Steuer- und Recheneinheit (30) beispielsweise über ein Netzwerk zugreifen kann.

Die erfindungsgemäße Vorrichtung kann beispielsweise als ein Computersystem ausgeführt sein. Ein "Computersystem" ist ein System zur elektronischen Datenverarbeitung, das mittels programmierbarer Rechenvorschriften Daten verarbeitet.

Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Computersysteme von heute werden häufig in Desktop-PCs, Portable PCs, Laptops, Notebooks, Netbooks und Tablet-PCs und so genannte Handhelds (z.B. Smartphone) unterteilt; alle diese Geräte können zur Ausführung der Erfindung genutzt werden.

Die Eingaben in den Computer erfolgen über Eingabemittel wie beispielsweise eine Tastatur, eine Maus, ein Mikrofon, ein Netzwerkanschluss, ein externer Datenspeicher und/oder dergleichen. Als Eingabe soll auch die Auswahl eines Eintrags aus einem virtuellen Menü oder einer virtuellen Liste oder das Anklicken eines Auswahlkästchens und dergleichen verstanden werden. Ausgaben erfolgen üblicherweise über einen Bildschirm (Monitor), auf einem Drucker, über Lautsprecher und/oder durch Speicherung auf einem Datenspeicher.

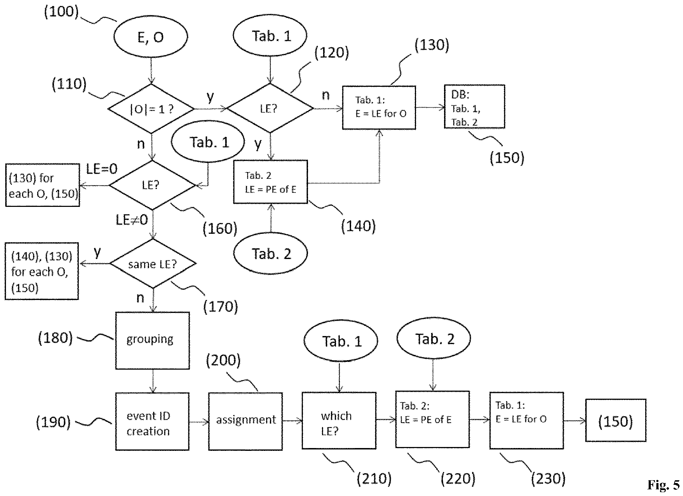

Fig. 5 zeigt schematisch in einem Ablaufdiagramm diejenigen Schritte, die ein Computersystem in einer bevorzugten Ausführungsform der vorliegenden Erfindung ausführt, wenn das erfindungsgemäße Computersystem in einem Arbeitsspeicher des Computersystems geladen ist und ausgeführt wird.

In einem ersten Schritt (100) empfängt das Computersystem Informationen zu einem Ereignis E und zu einem oder mehreren Objekten O, die von dem Ereignis betroffen sind. Üblicherweise empfängt es die Ereigniskennung von dem Ereignis, das eingetreten ist, und eine Liste von Objektkennungen derjenigen Objekte, die von dem Ereignis betroffen sind.

In einem weiteren Schritt (110) wird geprüft, ob das Ereignis nur ein einziges Objekt betrifft (|O| = 1?). Für den Fall, dass nur ein einziges Objekt betroffen ist (Schritt (110): "y"), wird in einem weiteren Schritt (120) anhand einer ersten Tabelle (Tab. 1) geprüft, ob für das Objekt bereits ein Ereignis eingetreten ist (LE?). Wenn die erste Tabelle für das Objekt einen Eintrag für ein letztes Ereignis (LE) enthält, ist bereits ein Ereignis eingetreten. Ist für das Objekt bisher kein Ereignis eingetreten (Schritt (120): "n"), wird in einem weiteren Schritt (130) für das Objekt in der ersten Tabelle festgehalten, dass das letzte Ereignis, von dem das Objekt betroffen ist, das Ereignis E ist (E = LE for O). Gibt es ein bereits ein Ereignis für das Objekt in der ersten Tabelle (Schritt (120): "y"), wird in einer zweiten Tabelle (Tab. 2) festgehalten, dass dieses Ereignis (LE) das Vorgängerereignis (PE) von dem Ereignis E ist (LE = PE of E). In einem weiteren Schritt (130) wird für das Objekt in der ersten Tabelle festgehalten, dass das Ereignis E nun das letzte Ereignis (LE) des Objekts O ist (E = LE for O). Das bisherige letzte Ereignis wird also durch das neue letzte Ereignis ersetzt. Die aktualisierten Tabellen (Tab. 1 und/oder Tab. 2) werden in einem weiteren Schritt (150) in einem Datenspeicher gespeichert (DB: Tab. 1, Tab.2).

Für den Fall, dass es mehrere Objekte gibt, die von dem Ereignis E betroffen sind (Schritt (110): "n"), wird in einem weiteren Schritt (160) anhand der ersten Tabelle (Tab. 1) geprüft, welche Objekte, die von dem Ereignis E betroffen sind, bereits ein Ereignis aufweisen (LE ≠ 0), und welche Objekte, die von dem Ereignis E betroffen sind, kein Ereignis aufweisen (LE = 0). Für all diejenigen Objekte, die bisher kein Ereignis aufweisen (LE = 0), wird der Schritt (130) durchgeführt, d.h. es wird in der ersten Tabelle (Tab. 1) festgehalten, dass das Ereignis E das letzte Ereignis für das jeweilige Objekt ist und anschließend wird die erste Tabelle in dem Datenspeicher gespeichert (Schritt (150)). Für alle Objekte, die bereits ein Ereignis aufweisen (LE ≠ 0), wird in einem weiteren Schritt (170) geprüft, ob sie alle das gleiche letzte Ereignis aufweisen (same LE?). Für den Fall, dass alle Objekte das gleiche letzte Ereignis aufweisen ("y"), werden die Schritte (140) und (150) für jedes einzelne Objekt durchgeführt, das heißt, in der zweiten Tabelle (Tab. 2) wird festgehalten, dass das letzte Ereignis das Vorgängerereignis des Ereignis E ist, und in der ersten Tabelle (Tab. 1) wird festgehalten, dass das Ereignis E das letzte Ereignis für das jeweilige Objekt ist. Anschließend werden die aktualisierten Tabellen (Tab. 1 und Tab. 2) in dem Datenspeicher gespeichert (Schritt (150)). Für den Fall, dass ein oder mehrere Objekte verschiedene letzte Ereignisse aufweisen (Schritt (170): "n"), werden in einem weiteren Schritt (180) Gruppen gebildet und die Objekte den Gruppen anhand der letzten Ereignisse zugeordnet ("grouping"). Haben zwei Objekte das gleiche letzte Ereignis, werden sie derselben Gruppe zugeordnet. Es gibt so viele Gruppen, wie es verschiedene letzte Ereignisse gibt. In einem weiteren Schritt (190) werden neue Ereigniskennungen für das Ereignis E erzeugt ("event ID creation"). Es werden so viele Ereigniskennungen erzeugt, wie es Gruppen gibt. In einem weitern Schritt (200) werden die erzeugten Ereigniskennungen den Gruppen zugeordnet ("assignment"); dies kann willkürlich geschehen; jeder Gruppe wird eine Ereigniskennung zugeordnet. Durch die Gruppenzugehörigkeit ist auch jedem Objekt damit eine Ereigniskennung zugeordnet. In einem weiteren Schritt (210) wird anhand der ersten Tabelle (Tab. 1) für die einzelnen Objekte geprüft, welches letzte Ereignis für sie in der ersten Tabelle festgehalten ist ("which LE?"). Das jeweilige letzte Ereignis ist das Vorgängerereignis für die erzeugte Ereigniskennung, die dem Objekt zugeordnet ist. In einem weiteren Schritt (220) wird in der zweiten Tabelle für jede erzeugte Ereigniskennung das entsprechende Vorgängerereignis festgehalten. In einem weiteren Schritt (230) wird für jedes Objekt in der ersten Tabelle das bisherige letzte Ereignis durch die dem Objekt zugeordnete erzeugte Ereigniskennung ersetzt. In einem weiteren Schritt (150) werden die aktualisierten Tabellen (Tab. 1 und Tab. 2) werden in dem Datenspeicher gespeichert

## Patentansprüche

1. Verfahren zur Verfolgung von Objekten, umfassend die Schritte:
- Bereitstellen einer Vielzahl von Objekten
- Erfassen von Ereignissen, die für die Objekte eingetreten sind, und
- Ablegen von Informationen zu den Objekten und zu den eingetretenen Ereignissen in einer ersten Tabelle und in einer zweiten Tabelle
wobei in der ersten Tabelle jedes Objekt durch eine eindeutige Objektkennung repräsentiert wird,
wobei in der ersten Tabelle für jedes Objekt dasjenige Ereignis abgelegt wird, das für das jeweilige Objekt zuletzt eingetreten ist,
wobei in der zweiten Tabelle für jedes Ereignis, dem ein Ereignis unmittelbar vorangegangen ist, das jeweilige vorangegangene Ereignis eingetragen wird.

2. Verfahren gemäß Anspruch 1 umfassend die Schritte:
- Empfangen von Objektkennungen einer Vielzahl von Objekten,
- Erzeugen einer ersten Tabelle, wobei jedes Objekt in der ersten Tabelle durch die jeweilige Objektkennung repräsentiert wird,
- Empfangen von Informationen über Ereignisse und über diejenigen Objekte, für die die jeweiligen Ereignisse eingetreten sind,
- für alle Objekte, für die mindestens ein Ereignis eingetreten ist: Eintragen des jeweils zuletzt eingetretenen Ereignisses in die ersten Tabelle,
- Erzeugen einer zweiten Tabelle,
- für jedes Ereignis, das für mindestens ein Objekt eingetreten ist und dem mindestens ein Ereignis vorangegangen ist: Eintragen des unmittelbar vorangegangenen Ereignisses in die zweite Tabelle,
- Speichern der ersten Tabelle und der zweiten Tabelle in einem Datenspeicher.

3. Verfahren gemäß einem der Ansprüche 1 oder 2, umfassend die Schritte:
- Empfangen von Informationen über ein Ereignis E und über diejenigen Objekte, für die das Ereignis E eingetreten ist,
- für alle Objekte, für die das Ereignis E eingetreten ist: Ersetzten des jeweiligen letzten Ereignisses LE durch das Ereignis E in der ersten Tabelle, und
- Erzeugen eines neuen Eintrags in der zweiten Tabelle, wobei für das Ereignis E festgehalten wird, dass das Vorgängerereignis des Ereignisses E das Ereignis LE ist.

4. Verfahren gemäß einem der Ansprüche 1 bis 3 umfassend die Schritte:
- Empfangen von Informationen über ein Ereignis E und über diejenigen Objekte, für die das Ereignis E eingetreten ist,
- Prüfen anhand der ersten Tabelle, ob für alle Objekte, für die das Ereignis E eingetreten ist, das gleiche letzte Ereignis LE eingetreten ist,
- für den Fall, dass für alle Objekte, für die das Ereignis E eingetreten ist, das gleiche letzte Ereignis LE eingetreten ist:
∘ für alle Objekte, für die das Ereignis E eingetreten ist: Ersetzten des letzten Ereignisses LE durch das Ereignis E in der ersten Tabelle, und
∘ Erzeugen eines neuen Eintrags in der zweiten Tabelle, wobei für das Ereignis E festgehalten wird, dass das Vorgängerereignis des Ereignisses E das Ereignis LE ist,
- für den Fall, dass nicht für alle Objekte, für die das Ereignis E eingetreten ist, das gleiche letzte Ereignis LE eingetreten ist:
∘ Bilden von Gruppen für alle Objekte, für die das Ereignis E eingetreten ist, wobei jede Gruppe diejenigen Objekte umfasst, die das gleiche letzte Ereignis aufweisen,
∘ Erzeugen von so vielen neuen Ereigniskennungen für das Ereignis E wie Gruppen gebildet wurden,
∘ für jede Gruppe: Zuordnen einer neuen Ereigniskennung zu einer Gruppe
∘ für alle Objekte, für die das Ereignis E eingetreten ist: Ersetzen des jeweils letzten Ereignisses in der ersten Tabelle durch die neue Ereigniskennung, die der Gruppe, zu der das Objekt gehört, zugeordnet wurde,
∘ für jede neue Ereigniskennung: Erzeugen eines neuen Eintrags in der zweiten Tabelle, wobei für die neue Ereigniskennung als Vorgängerereignis festgehalten wird, welches letzte Ereignis es in der ersten Tabelle ersetzt hat.

5. Verfahren gemäß einem der Ansprüche 1 bis 4, wobei es sich bei den Objekten zumindest teilweise um körperliche Gegenstände, vorzugsweise Waren handelt.

6. Verfahren gemäß Anspruch 5, wobei Objekte, die körperliche Gegenstände sind, jeweils eine eindeutige Objektkennung tragen.

7. Verfahren gemäß einem der Ansprüche 1 bis 6, ferner umfassend den Schritt: Anzeigen der ersten und/oder der zweiten Tabelle gegenüber einer Person vorzugsweise auf einem Bildschirm.

8. Verfahren gemäß einem der Ansprüche 1 bis 7, ferner umfassend die Schritte:
- Reproduzieren einer Ereignishistorie für ein Objekt, umfassend die Teilschritte:
(a) Ermitteln des letzten Ereignisses für das Objekt anhand der ersten Tabelle
(b) Ermitteln anhand der zweiten Tabelle, ob es für das letzte Ereignis ein Vorgängerereignis gibt
(c) für den Fall, dass es kein Vorgängerereignis gibt: Erzeugen der Ereignishistorie, wobei die Ereignishistorie nur das letzte Ereignis umfasst
(d) für den Fall, dass es ein Vorgängerereignis gibt:
(i) Prüfen anhand der zweiten Tabelle, ob das Vorgängerereignis seinerseits ein Vorgängerereignis aufweist,
(ii) Wiederholen des Teilschritts (i) bis kein weiteres Vorgängerereignis für ein Vorgängerereignis mehr gefunden wird,
(iii)Erzeugen der Ereignishistorie, wobei die Ereignishistorie das letzte Ereignis und die Vorgängerereignisse in der Reihenfolge umfasst, in der sie gefunden wurden,
- Ausgeben der Ereignishistorie gegenüber einer Person.

9. Vorrichtung umfassend
- eine Eingabeeinheit
- eine Steuer- und Recheneinheit und
- einen Datenspeicher
wobei die Steuer- und Recheneinheit konfiguriert ist, die Eingabeeinheit zu veranlassen, Objektkennungen einer Vielzahl von Objekten zu empfangen,
wobei die Steuer- und Recheneinheit konfiguriert ist, eine erste Tabelle zu erzeugen, wobei jedes Objekt in der ersten Tabelle durch die jeweilige Objektkennung repräsentiert wird,
wobei die Steuer- und Recheneinheit konfiguriert ist, die Eingabeeinheit zu veranlassen, Informationen über Ereignisse und über diejenigen Objekte, für die die jeweiligen Ereignisse eingetreten sind, zu empfangen,
wobei die Steuer- und Recheneinheit konfiguriert ist, in der ersten Tabelle für die Objekte festzuhalten, welches Ereignis jeweils zuletzt eingetreten ist,
wobei die Steuer- und Recheneinheit konfiguriert ist, eine zweite Tabelle zu erzeugen und in der zweiten Tabelle für jedes Ereignis, dem ein Ereignis vorangegangen ist, das unmittelbar vorangegangene Ereignis festzuhalten,
wobei die Steuer- und Recheneinheit konfiguriert ist, die erste Tabelle und die zweite Tabelle in dem Datenspeicher zu speichern.

10. Computerprogrammprodukt umfassend einen Programmcode, der auf einem Datenträger gespeichert ist, und der ein Computersystem dazu veranlasst, die folgenden Schritte auszuführen, wenn der Programmcode in den Arbeitsspeicher des Computersystems geladen ist:
- Empfangen von Objektkennungen einer Vielzahl von Objekten,
- Erzeugen einer ersten Tabelle, wobei jedes Objekt in der ersten Tabelle durch die jeweilige Objektkennung repräsentiert wird,
- Empfangen von Informationen über Ereignisse und über diejenigen Objekte, für die die jeweiligen Ereignisse eingetreten sind,
- für alle Objekte, für die mindestens ein Ereignis eingetreten ist: Eintragen des jeweils zuletzt eingetretenen Ereignisses in die ersten Tabelle,
- Erzeugen einer zweiten Tabelle,
- für jedes Ereignis, das für mindestens ein Objekt eingetreten ist und dem mindestens ein Ereignis vorangegangen ist: Eintragen des unmittelbar vorangegangenen Ereignisses in die zweite Tabelle,
- Speichern der ersten Tabelle und der zweiten Tabelle in einem Datenspeicher.

11. Computerprogrammprodukt gemäß Anspruch 10, wobei der Programmcode ein Computersystem dazu veranlasst, die in einem der Ansprüche 1 bis 8 genannten Schritte auszuführen.
